# EUROPEAN PATENT APPLICATION

(11) **EP 3 905 487 A1**
(43) Date of publication of application: **03.11.2021**
(21) Application number: 19905252.3
(22) Date of filing: 20.11.2019
(51) Int. Cl.: H02K 5/10

(54) **HIGH-SPEED MOTOR NON-CONTACT OVERHEAD WATERPROOF STRUCTURE**

(30) Priority: 24.12.2018 CN 201811585697; 24.12.2018 CN 201822177986 U
(71) Applicant: Suzhou Industrial Park Xingdesheng Motor Co., Ltd., Suzhou, Jiangsu 215000 (CN)
(72) Inventor: ZHU, Yunfang, Suzhou, Jiangsu 215000 (CN)
(74) Representative: Vitina, Maruta
(86) International application number: PCT/CN2019/119669
(87) International publication number: WO 2020/134730

(57) **Abstract**

A non-contact overhead waterproof structure for high-speed motors includes a motor main body, a movable impeller, a fixed impeller, a drainage device and a bearing. A waterproof cover plate is provided between the movable impeller and the fixed impeller. An overhead layer is provided between the drainage device and the fixed impeller. A drainage groove is provided under the fixed impeller and is configured to drain water entering the overhead layer. Pressures in the overhead layer and the bearing are positive and equal. Two sides of the motor main body are respectively provided with a fan cover air outlet. The fan cover air outlet is configured to discharge dirt in air. The overhead layer is provided, so that the overhead layer and a bearing are in a zone of positive pressure. Even if a small amount of water enters the overhead layer, the water fails to enter inside of the bearing since there is no pressure difference, protecting the bearing. The non-contact overhead waterproof structure has a simple structure and strong practicability.

## Description

### TECHNICAL FIELD

This application relates to a waterproof structure for motors, and more particularly to a non-contact overhead waterproof structure for a high-speed motor.

### BACKGROUND

Currently, the commercially-available motors generally adopt a conventional waterproof structure, which relies on waterproof performance of a bearing for waterproofing. However, in view of the high rotation speed of the motor, it fails to provide an effective waterproof effect only by processing the gap between inside and outside of the bearing to be small. Specifically, pressurized water or water-containing air can pass through the gap and enter the inside of the bearing, which will cause the bearing to be prone to corrosion and damage, thereby increasing the cost of production.

### SUMMARY

An object of this application is to provide a non-contact overhead waterproof structure for a high motor to overcome the defects in the prior art, which has desired waterproof performance and stable operation.

Technical solutions of this application are described as follows.

This application provides a non-contact overhead waterproof structure for a high-speed motor, comprising:
a motor main body;
a movable impeller;
a fixed impeller;
a drainage device; and
a bearing;
wherein a waterproof cover plate is provided between the movable impeller and the fixed impeller; an overhead layer is provided between the drainage device and the fixed impeller; a drainage groove is provided below the fixed impeller and is configured to drain water entering the overhead layer; pressures in the overhead layer and the bearing are positive and equal to each other; two sides of the motor main body are respectively provided with a fan cover air outlet; and the fan cover air outlet is configured to discharge dirt in air.

In an embodiment, the fixed impeller is provided with a limit groove; the waterproof cover plate is provided with a limit block; and the limit block is rotatably provided in the limit groove. The limit block is limited in the limit groove, so that the waterproof cover plate is fixed along an axial direction of a motor shaft provided in the motor main body relative to the fixed impeller. Therefore, the waterproof cover plate will not deviate during operation when it is subjected to vibration generated by the motor main body, thereby ensuring the stable operation.

In an embodiment, the limit groove is provided with silica gel. The silica gel is firstly injected into the limit groove, and then the waterproof cover plate is installed inside the limit groove after the silica gel solidifies. Since there is friction force between the waterproof cover plate and the silica gel, a groove will be formed on the silica gel at the position contacting with the waterproof cover plate, facilitating achieving a stable fit. As a consequence, it can further prevent water from entering a side of the waterproof cover plate facing the bearing from a side of the waterproof cover plate facing the movable impeller.

In an embodiment, a filter net is provided on an upper end of the limit groove; and the filter net is provided with an insertion hole. The filter net is configured to prevent the dirt in the air from entering the overhead layer. The limit block of the waterproof cover plate extends into the limit groove through the insertion hole, and the limit block is in rotatably matched with the insertion hole and the limit groove, such that the insertion hole is configured to position the limit block.

In an embodiment, the drainage device is provided with a flow guide block. The flow guide block is configured to effectively guide the water entering the overhead layer to ensure that the water finally flows into the drainage groove to be discharged through an outlet of the drainage groove.

In an embodiment, a storage tank is provided on a lower end of the drainage groove; and the storage tank is provided with a sliding groove. The water discharged from the drainage groove is absorbed by the storage tank. When the storage tank is about to be filled with water, it is pulled out by means of the sliding groove to pour the water and then the storage tank is put back again.

In an embodiment, the drainage device is provided with a fixing hole; and the fixing hole is provided with a guide block for matching with the sliding groove. The storage tank is fixed through the fixing hole, and the guide block is matched and connected with the sliding groove.

In an embodiment, a handle is provided on a front end of the storage tank. The handle is configured to facilitate the pull-out of the storage tank from the fixing hole, allowing for more simple and convenient operation.

In an embodiment, a waterproof seal gasket is provided on an upper end of the bearing. The waterproof seal gasket is configured to further prevent the water from entering the inside of the bearing and ensure a stable working state of the inside of the bearing.

Compared to the prior art, this disclosure has the following beneficial effects.

With respect to the non-contact overhead waterproof structure provided herein for high-speed motors, an overhead layer is provided, so that the overhead layer and a bearing are in a zone of positive pressure. Even if a small amount of water enters the overhead layer, the water fails to enter inside of the bearing without a pressure difference to protect the bearing from being rusted by water, so as to extend the service life.

### BRIEF DESCRIPTION OF THE DRAWINGS

This disclosure will be described below with reference to the accompanying drawings to make the technical solutions of the present disclosure clearer. It is apparent that presented in the drawings are only some embodiments of the present disclosure. Those of ordinary skill in the art can also obtain other drawings based on these drawings without paying any creative efforts.
FIG. 1 is a schematic diagram of a non-contact overhead waterproof structure for a high-speed motor according to an embodiment of the present disclosure.
FIG. 2 is a schematic diagram of a limit groove of a fixed impeller of the non-contact overhead waterproof structure according to an embodiment of the present disclosure.
FIG. 3 is a schematic diagram of a drainage device of the non-contact overhead waterproof structure according to an embodiment of the present disclosure.

In these drawings: 1, motor main body; 2, movable impeller; 3, fixed impeller; 4, drainage device; 5, bearing; 6, waterproof cover plate; 7, overhead layer; 8, drainage groove; 9, fan cover air outlet; 10, storage tank; 11, limit block; 12, waterproof seal gasket; 13, limit groove; 14, filter net; 15, insertion hole; 16, silica gel; 17, flow guide block; 18, sliding groove; 19, fixing hole; 20, guide block; 21, handle; and 22, motor shaft.

### DETAILED DESCRIPTION OF EMBODIMENTS

The present disclosure will be further described in detail with reference to the embodiments.

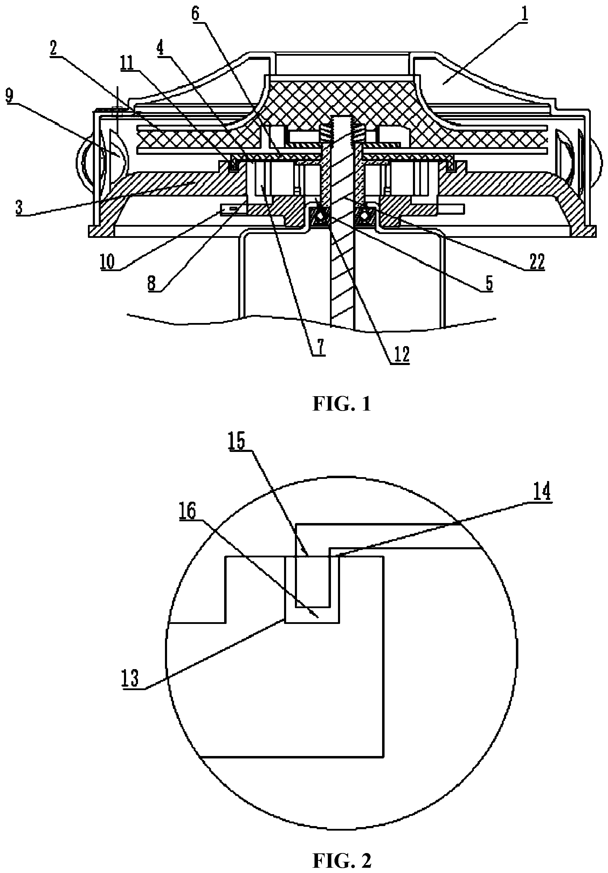

Referring to an embodiment shown in Fig. 1, this application provides a non-contact overhead waterproof structure for a high-speed motor, which has good waterproof performance and stable operation, and can effectively block water from entering inside of a bearing. The non-contact overhead waterproof structure includes a motor main body 1, a movable impeller 2, a fixed impeller 3, a drainage device 4 and a bearing 5. The movable impeller 2, the fixed impeller 3, the drainage device 4 and the bearing 5 are provided inside the motor main body 1. A motor shaft 22 is also provided inside the motor main body 1. The movable impeller 2, the fixed impeller 3 and the bearing 5 are sleeved on the motor shaft 22 at intervals in sequence.

A waterproof cover plate 6 is provided between the movable impeller 2 and the fixed impeller 3. The waterproof cover plate 6 is configured to prevent water from entering a side of the waterproof cover plate 6 facing the bearing 5 from a side of the waterproof cover plate 6 facing the movable impeller 2, thereby protecting the bearing 5 from being rusted by water. An overhead layer 7 is provided between the drainage device 4 and the fixed impeller 3. A drainage groove 8 is provided under the fixed impeller 3 and is communicated with the overhead layer 7. The drainage device 4 is configured to drain water entering the overhead layer 8 into the drainage groove 8. The drainage groove 8 is configured to drain the water therein. Pressures in the overhead layer 7 and the bearing 5 are positive and equal to each other. Two sides of the motor main body 1 are respectively provided with a fan cover air outlet 9. The fan cover air outlet 9 is configured to discharge air to protect the bearing 5 from being polluted by dirt in the air.

With respect to the non-contact overhead waterproof structure provided herein for high-speed motors, the overhead layer 7 is provided to ensure that the overhead layer 7 and the bearing 5 are in positive pressure. Even if a small amount of water enters the overhead layer 7, the water fails to enter inside of the bearing 5 since there is no pressure difference, which protects the bearing 5 from being rusted by water, so as to extend the service life.

Referring to an embodiment shown in Fig. 2, the fixed impeller 3 is provided with a limit groove 13. The waterproof cover plate 6 is provided with a limit block 11. The limit block 11 is rotatably provided in the limit groove 12. The limit block 11 is limited in the limit groove 13, so that the waterproof cover plate 6 is fixed along an axial direction of the motor shaft 22 provided in the motor main body 1 relative to the fixed impeller 3. Therefore, the waterproof cover plate 6 will not deviate during operation when it is subjected to vibration generated by the motor main body 1, thereby ensuring the stable operation.

In an embodiment, the limit groove 13 is provided with silica gel 16. The silica gel 16 is firstly injected into the limit groove 13, and then the waterproof cover plate 6 is installed inside the limit groove 13 after the silica gel 16 solidifies. Since there is friction force between the waterproof cover plate 6 and the silica gel 16, a groove will be formed on the silica gel 16 at a position contacting with the waterproof cover plate 6. The limit block 11 of the waterproof cover plate 6 is matched with the groove on the silica gel 16 and finally achieves a stable fit, so as to further prevent water from entering the side of the waterproof cover plate 6 facing the bearing 5 from the side of the waterproof cover plate 6 facing the movable impeller 2.

In an embodiment, a filter net 14 is provided on an upper end of the limit groove 13. The filter net 14 is provided with an insertion hole 15. The filter net 14 is configured to prevent the dirt in the air from entering the overhead layer 7. The limit block 11 of the waterproof cover plate 6 extends into the limit groove 13 through the insertion hole 15, and the limit block 11 is rotatably matched with the insertion hole 15 and the limit groove 13, such that the insertion hole 15 is configured to position the limit block 11.

In the actual operation, the limit block 11 is provided on the waterproof cover plate 6, so that the limit block 11 is matched and connected with the limit groove 13 on the fixed impeller 3 and the waterproof cover plate 6 is fixed on the fixed impeller 3, thereby ensuring the waterproof cover plate 6 effectively performs a waterproof work. However, a certain gap will be still formed when the waterproof cover plate 6 is matched and connected with the fixed impeller 3. Therefore, the silica gel 16 is needed to be first injected into the limit groove 13, and then the waterproof cover plate 6 is installed inside the limit groove 13 after the silica gel 16 solidifies. There is friction force between the waterproof cover plate 6 and the silica gel 16. The waterproof cover plate 6 and the motor shaft 22 in the motor main body 1 are fixed together, so that the waterproof cover plate 6 and the motor shaft 22 are driven by the motor to rotate together, forming a groove on the silica gel at the position contacting with the waterproof cover plate 6. The limit block 11 of the waterproof cover plate 6 is matched with the groove on the silica gel 16 and finally achieves a stable fit, so as to realize the effective waterproofing effect. In addition, the waterproof cover plate 6 synchronously rotates with the motor shaft 22 and has strong centrifugal force. The water on the waterproof cover plate 6 is removed under an action of the centrifugal force, which further enhances the waterproof performance.

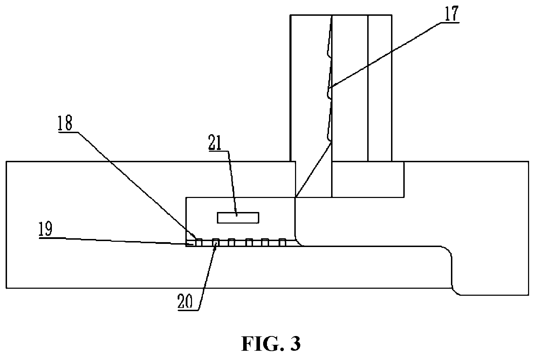

Referring to an embodiment shown in Fig. 3, the drainage device 4 is provided with a flow guide block 17. The flow guide block 17 is configured to effectively guide the water entering the overhead layer 7 to ensure that the water finally flows into the drainage groove 8 and flows out through an outlet of the drainage groove 8.

Referring to an embodiment shown in Figs. 1 and 3, a storage tank 10 is provided on a lower end of the drainage groove 8. The storage tank 10 is provided with a sliding groove 18. The water discharged from the drainage groove 8 is collected by the storage tank 10. When the storage tank 10 is about to be filled with water, it is pulled out by means of the sliding groove 18 to pour the water and then the storage tank 10 is put back again. Such design makes it simple to replace the storage tank 10, thereby enabling the motor main body 1 to work for a long time. The non-contact overhead waterproof structure provided herein has a simple structure and convenient operation.

Referring to an embodiment shown in Fig. 3, the drainage device 4 is provided with a fixing hole 19. The fixing hole 19 is provided with a guide block 20 for matching with the sliding groove 18. The storage tank 10 is fixed through the fixing hole 19, and the guide block 20 is matched and connected with the sliding groove 18 to guide the storage tank 10 to be pulled out from the fixing hole 19.

Referring to an embodiment shown in Fig. 3, a handle 21 is provided on a front end of the storage tank 10. The handle 21 is configured to pull out the storage tank 10 from the fixing hole 19, which is more simple and convenient.

Referring to an embodiment shown in Fig. 1, a waterproof seal gasket 12 is provided on an upper end of the bearing 5. The waterproof seal gasket 12 is configured to further prevent the water from entering the inside of the bearing 5 and ensure a stable working state of the inside of the bearing 5.

In actual operation, only a small amount of water may penetrate the waterproof cover plate 6 because a gap between the waterproof cover plate 6 and the limit groove 13 is very small.

In order to facilitate the drainage device 4 to drain out of water entering the overhead layer 7, the drainage device 4 is provided with the flow guide block 17 to control a direction of water flow, so that the water flows into the drainage groove 8 and then flows into the storage tank 10 through the outlet the drainage groove 8. The discharged water is finally stored in the storage tank 10 to avoid affecting other components. In addition, the storage tank 10 can be quickly pulled out to remove the water therein by means of the sliding groove 921 and the guide block 932, simplifying the operation and achieving the long-time work.

The above description is intended to enable those skilled in the prior art to implement and use the invention, and should not be construed as limitation to this application. It should be understood that any modifications, changes and replacements made by those skilled in the art without departing from the spirit of the disclosure should still fall within the scope of the disclosure defined by the appended claims.

## Claims

1. A non-contact overhead waterproof structure for a high-speed motor, comprising:
a motor main body;
a movable impeller;
a fixed impeller;
a drainage device; and
a bearing;
wherein a waterproof cover plate is provided between the movable impeller and the fixed impeller; an overhead layer is provided between the drainage device and the fixed impeller; a drainage groove is provided below the fixed impeller and is configured to drain water entering the overhead layer; pressures in the overhead layer and the bearing are positive and equal to each other; two sides of the motor main body are respectively provided with a fan cover air outlet; and the fan cover air outlet is configured to discharge dirt in air.

2. The non-contact overhead waterproof structure according to claim 1, **characterized in that** the fixed impeller is provided with a limit groove; the waterproof cover plate is provided with a limit block; and the limit block is rotatably provided in the limit groove.

3. The non-contact overhead waterproof structure according to claim 2, **characterized in that** silica gel is provided in the limit groove.

4. The non-contact overhead waterproof structure according to claim 2, **characterized in that** a filter net is provided on an upper end of the limit groove; and the filter net is provided with an insertion hole.

5. The non-contact overhead waterproof structure according to claim 1, **characterized in that** the drainage device is provided with a flow guide block.

6. The non-contact overhead waterproof structure according to claim 1, **characterized in that** a storage tank is provided on a lower end of the drainage groove; and the storage tank is provided with a sliding groove.

7. The non-contact overhead waterproof structure according to claim 6, **characterized in that** the drainage device is provided with a fixing hole for fixing the storage tank; and the fixing hole is provided with a guide block for matching with the sliding groove.

8. The non-contact overhead waterproof structure according to claim 7, **characterized in that** a handle is provided on a front end of the storage tank.

9. The non-contact overhead waterproof structure according to claim 1, **characterized in that** a waterproof seal gasket is provided on an upper end of the bearing.
